# EUROPEAN PATENT APPLICATION

(11) **EP 4 468 075 A1**
(43) Date of publication of application: **27.11.2024**
(21) Application number: 22922073.6
(22) Date of filing: 25.11.2022
(51) Int. Cl.: G02F 3/00, G06E 3/00, G02B 26/08, G02F 1/13

(54) **OPTICAL COMPUTATION DEVICE AND OPTICAL COMPUTATION METHOD**

(30) Priority: 20.01.2022 JP 2022007193
(71) Applicant: Fujikura Ltd., Tokyo 135-8512 (JP)
(72) Inventor: KUSAKA, Hiroyuki, Tokyo 135-8512 (JP); KASHIWAGI, Masahiro, Tokyo 135-8512 (JP)
(74) Representative: Plasseraud IP
(86) International application number: PCT/JP2022/043478
(87) International publication number: WO 2023/139922

(57) **Abstract**

Provided is an optical computing device capable of carrying out high-speed optical computing while reducing information loss from binarization. An optical computing device (1) includes: a spatial light modulator (11) that carries out, for each cell, binary modulation of carrier light (L0) to thereby generate signal light (L1) indicative of a wave number space image (I1); and an optical modulation element group (13) consisting of at least one optical modulation element (13a1 to 13an) that sequentially acts on the signal light (L1).

## Description

### Technical Field

The present invention relates to an optical computing device including an optical modulation element group and an optical computing method involving use of the optical modulation element group.

### Background Art

There has been known an optical modulation element which has a plurality of cells and which is designed to optically perform predetermined computing by causing signal light beams having respectively passed through the plurality of cells to interfere with each other. Optical computing carried out with use of such an optical modulation element has an advantage of achieving higher speed and lower electric power consumption as compared with electrical computing carried out with use of a processor. Further, by causing a plurality of optical modulation elements to sequentially act on signal light, it is easy to achieve high-level optical computing that is difficult to achieve with a single optical modulation element.

Patent Literature 1 discloses an optical neural network having an input layer, an intermediate layer, and an output layer. The above-described optical modulation element can be used as, for example, the intermediate layer of such an optical neural network.

### Citation List

### [Patent Literature]

[Patent Literature 1]
Specification of US Patent No. 7847225

### Summary of Invention

### Technical Problem

In an optical computing device, signal light to be inputted into an optical modulation element group is typically generated by a spatial light modulator which carries out, for each cell, modulation (intensity modulation or phase modulation) of carrier light. The spatial light modulator can be, for example, a liquid crystal on silicon (LCOS). LCOS carries out multi-level (typically, 8 bits) modulation of carrier light for each cell and is therefore able to generate signal light having a large amount of information. LCOS, however, has a modulation rate of approximately 60 Hz. Thus, due to the modulation rate of LCOS being a bottleneck, it is not possible to make full use of the high speed of optical computing by the optical modulation elements.

As such, there is ongoing research for generating, with use of a spatial light modulator that carries out binary (1 bit) modulation of carrier light for each cell, signal light to be inputted into an optical modulation element group. This is because a spatial light modulator that carries out binary modulation of carrier light for each cell can be caused to operate faster than LCOS. Examples of such a spatial light modulator include a digital mirror device (DMD) and a ferroelectric liquid crystal on silicon (FLCOS). However, in a case where an image to be supplied to the spatial light modulator is generated by binarization of an input image, unignorable loss of information can occur.

An aspect of the present invention has been achieved in light of the foregoing problem. It is an object of the aspect of the present invention to provide an optical computing device and an optical computing method each of which can carry out high-speed optical computing while reducing information loss from binarization.

### Solution to Problem

An inverse Fourier transform of an input image is carried out to generate a wave number space image, the wave number space image is binarized to generate a binarized image, and a Fourier transform of the binarized image is carried out to generate a real space image. In this way, it may be possible to obtain a real space image that approximates an input image better than a binarized image obtained by binarization of the input image itself. This indicates that there is a case in which an amount of information loss is smaller in binarization of a wave number space image obtained by Fourier transform of an input image than in binarization of the input image itself. By focusing on this point, the inventors of the present invention arrived at the present invention.

An optical computing device in accordance with an aspect of the present invention is an optical computing device, including: a spatial light modulator that carries out, for each cell, binary modulation of carrier light to thereby generate signal light indicative of a wave number space image; and an optical modulation element group consisting of at least one optical modulation element that sequentially acts on the signal light.

An optical computing method in accordance with another aspect of the present invention is an optical computing method, including the steps of: carrying out, for each cell, binary modulation of carrier light to thereby generate signal light indicative of a wave number space image; and carrying out optical computing by causing at least one optical modulation element to sequentially act on the signal light.

### Advantageous Effects of Invention

According to an aspect of the present invention, it is possible to carry out high-speed optical computing while reducing information loss from binarization.

### Brief Description of Drawings

Fig. 1 is a side view illustrating a configuration of an optical computing device in accordance with an embodiment of the present invention.
Fig. 2 is a plan view illustrating a specific example of an optical modulation element included in the optical computing device illustrated in Fig. 1.
Fig. 3 is a partial enlarged perspective view illustrating the optical modulation element illustrated in Fig. 2.
Fig. 4 is a side view illustrating a variation of the optical computing device illustrated in Fig. 1.
Fig. 5 is a plan view illustrating a specific example of an optical modulation element included in the optical computing device illustrated in Fig. 4.
Fig. 6 is a cross-sectional view of a cell included in the optical modulation element illustrated in Fig. 5.

### Description of Embodiments

### (Configuration of optical computing device)

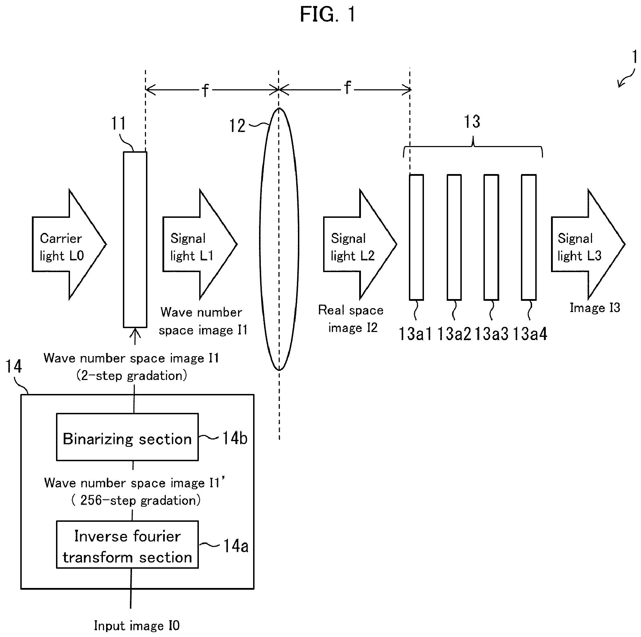

With reference to Fig. 1, the following will describe an optical computing device 1 in accordance with an embodiment of the present invention. Fig. 1 is a side view illustrating a configuration of the optical computing device 1.

As illustrated in Fig. 1, the optical computing device 1 includes a spatial light modulator 11, a lens 12, an optical modulation element group 13, and a driver 14.

The spatial light modulator 11 is a configuration for obtaining signal light L1 indicative of a wave number space image I1, by binary modulation of carrier light L0 for each cell. In the present embodiment, the spatial light modulator 11 is a spatial light modulator that carries out, for each cell, binary intensity modulation or binary phase modulation of the carrier light L0. A spatial light modulator that carries out, for each cell, binary intensity modulation of the carrier light L0 can be, for example, a digital mirror device (DMD). A spatial light modulator that carries out, for each cell, binary phase modulation of the carrier light L0 can be, for example, a ferroelectric liquid crystal on silicon (FLCOS).

The lens 12 is a configuration for carrying out a Fourier transform of the signal light L1 indicative of the wave number space image I1, to thereby obtain signal light L2 indicative of a real space image I2. In the present embodiment, the lens 12 is a lens having a positive focal length f. The lens 12 is provided such that: a principal plane of the lens 12 is parallel to an exit surface of the spatial light modulator 11; and a distance between the principal plane of the lens 12 and the exit surface of the spatial light modulator 11 coincides with the focal length f of the lens 12. Examples of a lens having a positive focal length f include a convex lens and a Fresnel lens. Further, a transmissive optical modulation element designed to function as a convex lens can be used as the lens 12.

The optical modulation element group 13 is a group of n optical modulation elements 13a1 to 13an that sequentially act on the signal light L2. Here, n is any natural number of not less than 1. The example shown in Fig. 1 is a case where n = 4. Each of the optical modulation elements 13ai is an element that has an optical computing function, that is, a function of converting a two-dimensional intensity distribution or a two-dimensional phase distribution of signal light in accordance with a predetermined conversion rule. Here, i is a natural number of not less than 1 and not more than n. The optical modulation element group 13 is provided such that: an entrance surface of each of the optical modulation elements 13ai is parallel to the principal plane of the lens 12; and a distance between an entrance surface of the optical modulation element 13a1, which is closest to the lens 12, and the principal plane of the lens 12 coincides with the focal length f of the lens 12. In the present embodiment, each of the optical modulation elements 13ai is a transmissive optical modulation element. A specific example of the optical modulation element 13ai will be described later.

To the optical modulation element group 13, the signal light L2 indicative of the real space image I2 is inputted. The signal light L2 passes through a first optical modulation element 13a1, a second optical modulation element 13a2, ... , and an n-th optical modulation element 13an in this order. Thus, in the optical modulation element group 13, computing f = fn·, ... , ·f2·f1 carried out by synthesizing computing f1 by the first optical modulation element 13a1, computing f2 by the second optical modulation element 13a2, ... , and computing fn by the n-th optical modulation element 13an is performed with respect to the real space image I2 indicated by the signal light L2. As such, the optical modulation element group 13 makes it possible to obtain signal light L3 that is obtained by applying the computing f to the real space image I2 and that is indicative of an image I3 = f(I2).

The driver 14 is a configuration for driving the spatial light modulator 11. The driver 14 includes an inverse Fourier transform section 14a and a binarizing section 14b. The inverse Fourier transform section 14a carries out an inverse Fourier transform of an input image I0 to obtain a wave number space image I1'. The number of gradations of the wave number space image I1' is the same as that of the input image I0, and is, for example, 256. The binarizing section 14b binarizes the wave number space image I1' to obtain a binarized wave number space image I1. The driver 14 drives the spatial light modulator 11 so as to generate the signal light L1 indicative of the binarized wave number space image I1.

Note that the lens 12 can be omitted. In this case, the signal light L1 indicative of the wave number space image I1 is inputted into the optical modulation element group 13. In this case, in the optical modulation element group 13, computing f = fn·fn-1·, ... , f2·f1 carried out by synthesizing computing f1 by the first optical modulation element 13a1, computing f2 by the second optical modulation element 13a2, ... , computing fn-1 by an n-1-th optical modulation element 13an-1, and computing fn by the n-th optical modulation element 13an is performed with respect to the wave number space image I1 indicated by the signal light L1. As such, the optical modulation element group 13 makes it possible to obtain signal light L3 that is obtained by applying the computing f to the wave number space image I1 and that is indicative of an image I3 = f(I1).

Further, the optical computing device 1 can include a light source that generates the carrier light L0, in addition to the configurations described above. Further, the optical computing device 1 can include, in addition to the configurations described above, a two-dimensional image sensor that converts the signal light L3 indicative of the image I3 into an electrical signal indicative of the image I3.

Further, the distance between the exit surface of the spatial light modulator 11 and the principal plane of the lens 12 does not have to exactly coincide with the focal length f of the lens 12. Likewise, the distance between the principal plane of the lens 12 and the entrance surface of the optical modulation element 13a1 does not have to exactly coincide with the focal length f of the lens 12. Even in a case where these distances do not exactly coincide with the focal length f of the lens 12, the signal light L2 entering the optical modulation element group 13 includes components indicative of the real space image I2. As such, it is possible to carry out optical computing equivalent to optical computing in a case where these distances exactly coincide with the focal length f of the lens 12.

The optical modulation elements 13a1 to 13an may be integrated together. For example, n light diffraction layers formed inside a structure that allows signal light to pass therethrough, such as a dried gel may be used as the optical modulation elements 13a1 to 13an. In this case, it is preferable to use a gel that is subjected to dehydration shrinkage so that the gel shrinks while keeping a similar shape, e.g., a gel used in the Implosion Fabrication process. This makes it possible to, by drying a swollen gel in which n light diffraction layers are formed, easily manufacture the optical modulation element group 13 in which the optical modulation elements 13a1 to 13an are arranged with high precision.

### (Specific example of transmissive optical modulation element)

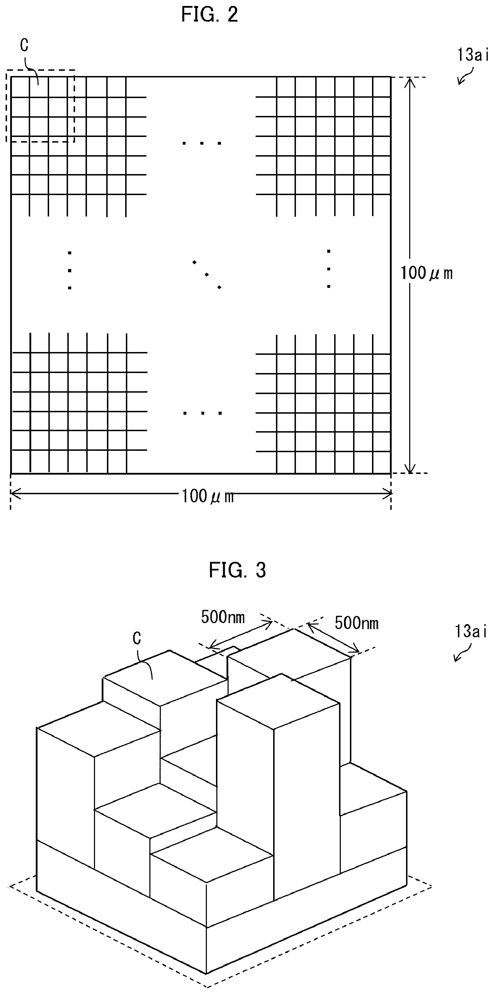

The following description will discuss, with reference to Figs. 2 and 3, a specific example of the transmissive optical modulation element 13ai. Fig. 2 is a plan view of the optical modulation element 13ai in accordance with the present specific example. Fig. 3 is an enlarged perspective view of a part (i.e., a part surrounded by the broken lines in Fig. 2) of the optical modulation element 13ai in accordance with the present specific example.

As shown in Fig. 2, the optical modulation element 13ai is constituted by a plurality of microcells C having respective phase-modulation amounts that are set independently of each other. When signal light enters the optical modulation element 13ai, the signal light is phase-modulated by the microcells C, and signal light beams thus phase-modulated by the microcells C interfere with each other. Consequently, predetermined optical computing (conversion of a two-dimensional intensity distribution according to a predetermined conversion rule) is carried out. The phase modulation amounts of the microcells C may be variable or may be fixed. In the present specific example, the phase modulation amounts are fixed.

In the present specification, "microcell" means a cell having a cell size of less than 10 pm, for example. Further, "cell size" means a square root of an area of a cell. For example, given that the microcell C is in the form of a square in a plan view, a cell size of the microcell C means a length of one side of the microcell C. A lower limit of the cell size of the microcell C is 1 nm, for example.

The optical modulation element 13ai shown in Fig. 2 as an example is constituted by 200 × 200 microcells C arranged in matrix. A shape of each microcell C in a plan view is a square of 500 nm × 500 nm. A shape of the optical modulation element 13ai in a plan view is a square of 100 pm × 100 pm.

A phase-modulation amount of signal light that passes through each microcell C can be set independently for the cell by (1) setting a thickness of the microcell C independently for the cell or (2) selecting a refractive index of the microcell C independently for the cell. The present embodiment employs the method (1), which can be carried out by nanoimprinting. In this case, as shown in Fig. 3, each microcell C is constituted by a pillar having a quadrangular prism shape having a square bottom surface with sides each having a length equal to a cell size. In this case, the phase-modulation amount of the signal light passing through each microcell C is determined in accordance with a height of a pillar constituting the microcell C. That is, signal light that passes through a microcell C constituted by a pillar having a high height has a large phase-modulation amount, whereas signal light that passes through a microcell C constituted by a pillar having a low height has a small phase-modulation amount.

Note that the phase-modulation amount of each of the microcells C can be set, for example, through machine learning. A model used in this machine learning can be, for example, a model in which a two-dimensional intensity distribution of signal light inputted into the optical modulation element 13ai is an input, and a two-dimensional intensity distribution of signal light outputted from the optical modulation element 13ai is an output and which includes a phase-modulation amount of each of the microcells C as a parameter. Here, the two-dimensional intensity distribution of the signal light inputted into the optical modulation element 13ai means a set of intensities of signal light beams inputted into the respective microcells that constitute the optical modulation element 13ai. Further, the two-dimensional intensity distribution of the signal light outputted from the optical modulation element 13ai means: a set of intensities of signal light beams inputted into respective microcells C that constitute an optical modulation element 13ai+ 1 disposed to follow the optical modulation element 13ai; or a set of intensities of signal light beams inputted into respective microcells that constitute a two-dimensional image sensor disposed to follow the optical modulation element 13ai.

### (Variation of optical computing device)

In the optical computing device 1, the optical modulation element group 13 is constituted by transmissive optical modulation elements 13a1 to 13an. The present invention, however, is not limited to this. That is, the optical modulation element group 13 can be constituted by reflective optical modulation elements 13b1 to 13bn.

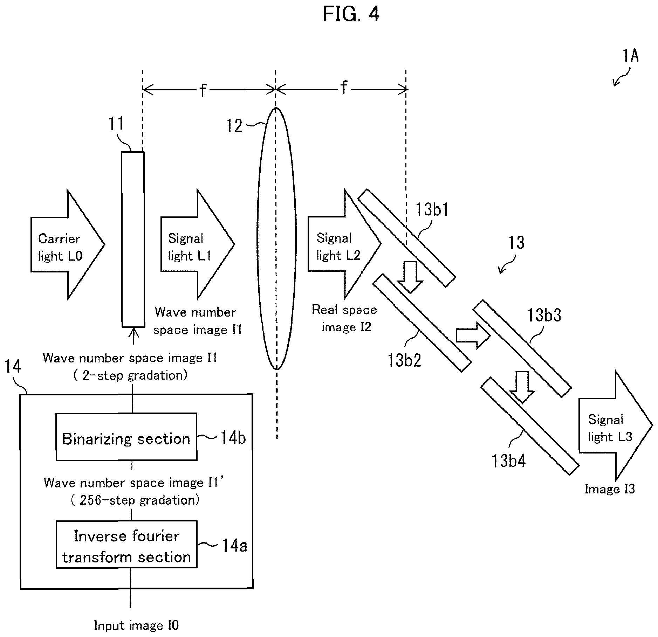

Fig. 4 is a side view illustrating a configuration of an optical computing device 1A in which an optical modulation element group 13 is constituted by reflective optical modulation elements 13b1 to 13bn. In the optical computing device 1A, signal light L3 is obtained by causing signal light L2 to be (1) modulated and reflected by the optical modulation element 13b1, (2) modulated and reflected by an optical modulation element 13b2, (3) modulated and reflected by an optical modulation element 13b3, and (4) modulated and reflected by an optical modulation element 13b4.

In the optical computing device 1A, the optical modulation element 13b1 is provided such that a center of the optical modulation element 13b1 is located at a focal point of a lens 12. As such, in the optical computing device 1A, a signal light beam L2 that enters the center of the optical modulation element 13b1 has an intensity equal to an intensity of a signal light beam L2 that enters a center of the optical modulation element 13a1 of the optical computing device 1. Meanwhile, in the optical computing device 1A, a main surface of the optical modulation element 13b1 is not orthogonal to an optical axis of the lens 12. As such, in the optical computing device 1A, a signal light beam L2 that enters a point in the optical modulation element 13b1 other than the center of the optical modulation element 13b1 has an intensity not equal to an intensity of a signal light beam L2 that enters a corresponding point in the optical modulation element 13a of the optical computing device 1. Thus, an intensity distribution of the signal light L2 entering the optical modulation element 13b1 indicates an approximate real space image I2', rather than an exact real space image I2. As such, respective phase-modulation amounts of the cells constituting each of the optical modulation elements 13b1 to 13bn are designed such that desired optical computing is carried out when the approximate real space image I2' enters the optical modulation element 13b1.

The optical modulation elements 13b1 and 13b3, which are provided on the same plane, may be integrated together. For example, the optical modulation elements 13b1 and 13b3 can be embedded in a single substrate, or two regions of a single optical modulation element can be used as the optical modulation elements 13b1 and 13b3. The same is true of the optical modulation elements 13b2 and 13b4 which are provided on the same plane. Further, four light diffraction layers formed inside a structure that allows signal light to pass therethrough, such as a dried gel may be used as the optical modulation elements 13b1 to 13b4. In this case, it is preferable to use a gel that is subjected to dehydration shrinkage so that the gel shrinks while keeping a similar shape, e.g., a gel used in the Implosion Fabrication process. This makes it possible to, by drying a swollen gel in which four light diffraction layers are formed, easily manufacture the optical modulation element group 13 in which the optical modulation elements 13b1 to 13b4 are arranged with high precision.

### (Specific example of reflective optical modulation element)

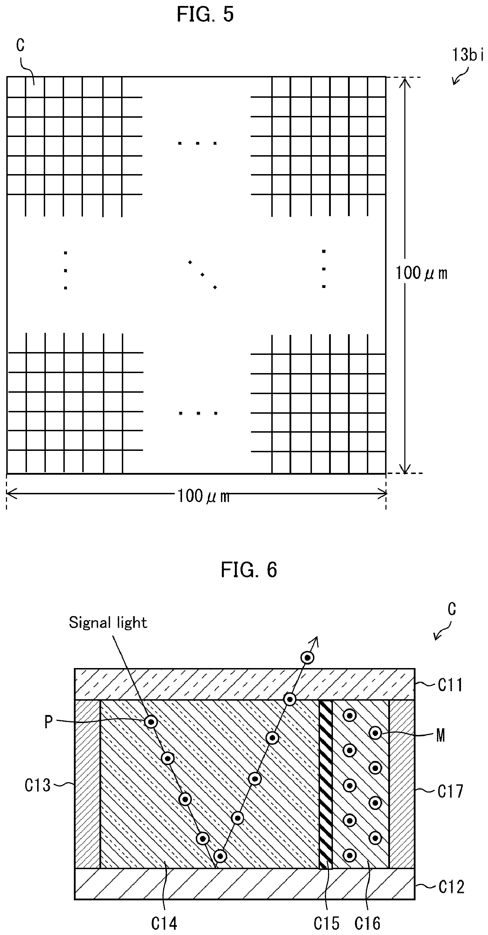

The following description will discuss, with reference to Figs. 5 and 6, a specific example of a reflective optical modulation element 13bi. Fig. 5 is a plan view of the optical modulation element 13bi in accordance with the present specific example. Fig. 6 is a cross-sectional view of a microcell C included in the optical modulation element 13bi in accordance with the present specific example.

As shown in Fig. 5, the optical modulation element 13bi includes a plurality of microcells C having respective phase-modulation amounts that can be set independently of each other. When signal light enters the optical modulation element 13bi, the signal light is phase-modulated by the microcells C, and signal light beams thus phase-modulated by the microcells C interfere with each other. Consequently, predetermined optical computing (conversion of a two-dimensional intensity distribution according to a predetermined conversion rule) is carried out. The phase-modulation amounts of the microcells C may be variable or may be fixed. In the present specific example, the phase-modulation amounts are variable.

The optical modulation element 13bi shown in Fig. 5 as an example is constituted by 200 × 200 microcells C arranged in matrix. A shape of each microcell C in a plan view is a square of 500 nm × 500 nm. A shape of the optical modulation element 13bi in a plan view is a square of 100 pm × 100 pm.

For example, as shown in Fig. 6, each microcell C included in the optical modulation element 13bi may include a polarizing plate C11, a reflecting plate C12, a first electrode C13, a magnetization free layer C14, an insulating layer C15, a magnetization fixed layer C16, and a second electrode C17.

The polarizing plate C11 and the reflecting plate C12 are disposed opposite to each other. The first electrode C13, the magnetization free layer C14, the insulating layer C15, the magnetization fixed layer C16, and the second electrode C17 are stacked in this order, and are sandwiched between the polarizing plate C11 and the reflecting plate C12. Here, a direction in which the first electrode C13, the magnetization free layer C14, the insulating layer C15, the magnetization fixed layer C16, and the second electrode C17 are stacked is orthogonal to a direction in which the polarizing plate C11 and the reflecting plate C12 are stacked. Thus, a first side surface of the magnetization free layer C14 is in surface contact with one of main surfaces of the first polarizing plate C11, and a second side surface of the magnetization free layer C14 which is located opposite to the first side surface is in surface contact with one of main surfaces of the reflecting plate C12. The signal light L (1) enters an inside of the magnetization free layer C14 via the polarizing plate C11, (2) is reflected by the reflecting plate C12, and (3) is emitted through the polarizing plate C11 to an outside of the magnetization free layer C14.

The magnetization free layer C14 is made of, for example, a soft magnetic material having electric conductivity and light transmissivity (for example, CoFeB). The magnetization fixed layer C16 is made of, for example, a hard magnetic material having electric conductivity (for example, permalloy). Selected as the polarizing plate C11 is a polarizing plate that selectively allows, to pass therethrough, a polarized light component having a polarization direction P parallel to a magnetization direction M of the magnetization fixed layer C16. Fig. 6 takes as an example a case in which the magnetization direction M and the polarization direction P are parallel to both (i) the main surfaces of the polarizing plate C11 and (ii) main surfaces of the magnetization fixed layer C 16.

When a potential difference is provided between the first electrode C13 and the second electrode C17, a tunnel effect occurs and injects a spin current (a flow of spin-polarized electrons) from the magnetization fixed layer C16 through the insulating layer C15 into the magnetization free layer C14 to magnetize the magnetization free layer C14. Here, the magnetization occurring in the magnetization free layer C14 is magnetization parallel to the magnetization direction M of the magnetization fixed layer C16, that is, magnetization parallel to the polarization direction P of the signal light entering the magnetization free layer C14 through the polarizing plate C11. This causes a phase of the signal light to be delayed by a transverse Kerr effect during a process of transmission in the magnetization free layer C14.

Here, a phase-shift amount of the signal light in the cell C is determined depending on a magnitude of the magnetization in the magnetization free layer C14. The magnitude of the magnetization in the magnetization free layer C14 is determined depending on a magnitude of the spin current injected into the magnetization free layer C14. The magnitude of the spin current injected into the magnetization free layer C14 is determined depending on the potential difference provided between the first electrode C13 and the second electrode C17. Thus, regulating the potential difference provided between the first electrode C13 and the second electrode C17 can regulate phase modulating of the cell C.

Note that the phase-modulation amount of each of the microcells C can be set, for example, through machine learning. A model used in this machine learning can be, for example, a model in which a two-dimensional intensity distribution of signal light inputted into the optical modulation element 13bi is an input, and a two-dimensional intensity distribution of signal light outputted from the optical modulation element 13bi is an output and which includes a phase-modulation amount of each of the microcells C as a parameter. Here, the two-dimensional intensity distribution of the signal light inputted into the optical modulation element 13bi means a set of intensities of signal light beams inputted into the respective microcells that constitute the optical modulation element 13bi. Further, the two-dimensional intensity distribution of the signal light outputted from the optical modulation element 13bi means: a set of intensities of signal light beams inputted into respective microcells C that constitute an optical modulation element 13bi+1 disposed to follow the optical modulation element 13bi; or a set of intensities of signal light beams inputted into respective microcells that constitute a two-dimensional image sensor disposed to follow the optical modulation element 13bi.

### (Recap 1)

An optical computing device in accordance with Aspect 1 of the present invention is an optical computing device, including: a spatial light modulator that carries out, for each cell, binary modulation of carrier light to thereby generate signal light indicative of a wave number space image; and an optical modulation element group consisting of at least one optical modulation element that sequentially acts on the signal light.

According to the above configuration, the spatial light modulator that carries out, for each cell, binary modulation of carrier light is used. This makes it possible to carry out high-speed optical computing. Further, according to the above configuration, the spatial light modulator generates signal light indicative of a wave number space image. As such, an image to be supplied to the spatial light modulator can be generated by binarization of a wave number space image. This allows information loss from binarization to be reduced as compared with a case in which an image to be supplied to a modulator is generated by binarization of a real space image. As such, according to the above configuration, it is possible to carry out high-speed optical computing while reducing information loss from binarization.

An optical computing device in accordance with Aspect 2 of the present invention employs, in addition to the configuration in accordance with Aspect 1, a configuration in which the optical computing device further includes a lens that carries out a Fourier transform of the signal light, wherein the optical modulation element group acts on signal light obtained by the lens and indicative of a real space image.

According to the above configuration, it is possible to carry out high-speed optical computing with respect to signal light indicative of a real space image, while reducing information loss from binarization.

An optical computing device in accordance with Aspect 3 of the present invention employs, in addition to the configuration in accordance with Aspect 2, a configuration in which: the lens is a lens having a positive focal length; and a distance between an exit surface of the spatial light modulator and a principal plane of the lens and a distance between the principal plane of the lens and an entrance surface of an optical modulation element closest to the lens each coincide with a focal length of the lens.

According to the above configuration, it is possible to carry out a Fourier transform of signal light with use of a simple configuration.

An optical computing device in accordance with Aspect 4 of the present invention employs, in addition to the configuration in accordance with any one of Aspects 1 to 3, a configuration in which the optical computing device further includes a driver that drives the spatial light modulator and includes (i) an inverse Fourier transform section that carries out an inverse Fourier transform of an input image to thereby generate a wave number space image and (ii) a binarizing section that binarizes the wave number space image to thereby generate the wave number space image.

According to the above configuration, it is possible to, while reducing information loss from binarization, carry out high-speed optical computing with respect to signal light indicative of: a wave number space image (in a case where the optical computing device does not include a lens) obtained by carrying out an inverse Fourier transform of an input image; or a real space image (in a case where the optical computing device includes a lens) obtained by carrying out a Fourier transform of the wave number space image.

An optical computing device in accordance with Aspect 5 of the present invention employs, in addition to the configuration of any one of Aspects 1 to 4, a configuration in which the spatial light modulator is a digital mirror device (DMD) or a ferroelectric liquid crystal on silicon (FLCOS).

According to the above configuration, it is possible to carry out binary modulation for each cell with use of a simple configuration.

An optical computing device in accordance with Aspect 6 of the present invention employs, in addition to the configuration in accordance with any one of Aspects 1 to 5, a configuration in which each optical modulation element included in the optical modulation element group is constituted by a plurality of microcells having respective phase-modulation amounts that are settable independently of each other.

According to the above configuration, it is possible to carry out optical computing with respect to signal light with use of a simple configuration.

An optical computing device in accordance with Aspect 7 of the present invention employs, in addition to the configuration in accordance with any one of Aspects 1 to 6, a configuration in which each optical modulation element included in the optical modulation element group is a transmissive optical modulation element.

According to the above configuration, it is possible to input, into the optical modulation element group, signal light that indicates a real space image more accurately, as compared with a case in which an optical modulation element is constituted by a reflective optical modulation element.

An optical computing method in accordance with Aspect 8 of the present invention is an optical computing method, including the steps of: carrying out, for each cell, binary modulation of carrier light to thereby generate signal light indicative of a wave number space image; and carrying out optical computing by causing at least one optical modulation element to sequentially act on the signal light.

According to the above configuration, it is possible to carry out high-speed optical computing while reducing information loss from binarization.

### (Recap 2)

An optical computing device in accordance with Aspect 1 of the present invention is an optical computing device, including: a spatial light modulator that carries out, for each cell, binary modulation of carrier light to thereby generate signal light indicative of a wave number space image; and an optical modulation element group consisting of at least one optical modulation element that sequentially acts on the signal light.

According to the above configuration, the spatial light modulator that carries out, for each cell, binary modulation of carrier light is used. This makes it possible to carry out high-speed optical computing. Further, according to the above configuration, the spatial light modulator generates signal light indicative of a wave number space image. As such, an image to be supplied to the spatial light modulator can be generated by binarization of a wave number space image. This allows information loss from binarization to be reduced as compared with a case in which an image to be supplied to a modulator is generated by binarization of a real space image. As such, according to the above configuration, it is possible to carry out high-speed optical computing while reducing information loss from binarization.

An optical computing device in accordance with Aspect 2 of the present invention employs, in addition to the configuration in accordance with Aspect 1, a configuration in which the optical computing device further includes a lens that carries out a Fourier transform of the signal light, wherein the optical modulation element group acts on signal light obtained by the lens and indicative of a real space image.

According to the above configuration, it is possible to carry out high-speed optical computing with respect to signal light indicative of a real space image, while reducing information loss from binarization.

An optical computing device in accordance with Aspect 3 of the present invention employs, in addition to the configuration in accordance with Aspect 2, a configuration in which: the lens is a lens having a positive focal length; and a distance between an exit surface of the spatial light modulator and a principal plane of the lens and a distance between the principal plane of the lens and an entrance surface of an optical modulation element closest to the lens each coincide with a focal length of the lens.

According to the above configuration, it is possible to carry out a Fourier transform of signal light with use of a simple configuration.

An optical computing device in accordance with Aspect 4 of the present invention employs, in addition to the configuration in accordance with any one of Aspects 1 to 3, a configuration in which the optical computing device further includes a driver that drives the spatial light modulator and includes (i) an inverse Fourier transform section that carries out an inverse Fourier transform of an input image to thereby generate a wave number space image and (ii) a binarizing section that binarizes the wave number space image to thereby generate the wave number space image.

According to the above configuration, it is possible to, while reducing information loss from binarization, carry out high-speed optical computing with respect to signal light indicative of: a wave number space image (in a case where the optical computing device does not include a lens) obtained by carrying out an inverse Fourier transform of an input image; or a real space image (in a case where the optical computing device includes a lens) obtained by carrying out a Fourier transform of the wave number space image.

An optical computing device in accordance with Aspect 5 of the present invention employs, in addition to the configuration of any one of Aspects 1 to 4, a configuration in which the spatial light modulator is a digital mirror device (DMD) or a ferroelectric liquid crystal on silicon (FLCOS).

According to the above configuration, it is possible to carry out binary modulation for each cell with use of a simple configuration.

An optical computing device in accordance with Aspect 6 of the present invention employs, in addition to the configuration in accordance with any one of Aspects 1 to 5, a configuration in which each optical modulation element included in the optical modulation element group is a reflective optical modulation element and is constituted by a plurality of microcells having respective phase-modulation amounts that are settable independently of each other.

According to the above configuration, it is possible to carry out optical computing with respect to signal light with use of a simple configuration.

An optical computing device in accordance with Aspect 7 of the present invention employs, in addition to the configuration in accordance with any one of Aspects 1 to 5, a configuration in which each optical modulation element included in the optical modulation element group is a transmissive optical modulation element and is constituted by a plurality of microcells having respective phase-modulation amounts that are set independently of each other.

According to the above configuration, it is possible to input, into the optical modulation element group, signal light that indicates a real space image more accurately, as compared with a case in which an optical modulation element is constituted by a reflective optical modulation element.

An optical computing method in accordance with Aspect 8 of the present invention is an optical computing method, including the steps of: carrying out, for each cell, binary modulation of carrier light to thereby generate signal light indicative of a wave number space image; and carrying out optical computing by causing at least one optical modulation element to sequentially act on the signal light.

According to the above configuration, it is possible to carry out high-speed optical computing while reducing information loss from binarization.

### (Additional Remarks)

The present invention is not limited to the description of the embodiments, but can be altered in many ways by a person skilled in the art within the scope of the claims. An embodiment derived from a proper combination of technical means disclosed in different embodiments is also encompassed in the technical scope of the present invention.

### Reference Signs List

1: Optical computing device
11: Spatial light modulator
12: Lens
13: Optical modulation element group
13a1 to 13an: Optical modulation element

## Claims

1. An optical computing device, comprising: a spatial light modulator that carries out, for each cell, binary modulation of carrier light to thereby generate signal light indicative of a wave number space image; and
an optical modulation element group consisting of at least one optical modulation element that sequentially acts on the signal light.

2. The optical computing device as set forth in claim 1, further comprising:
a lens that carries out a Fourier transform of the signal light,
wherein the optical modulation element group acts on signal light obtained by the lens and indicative of a real space image.

3. The optical computing device as set forth in claim 2, wherein:
the lens is a lens having a positive focal length; and
a distance between an exit surface of the spatial light modulator and a principal plane of the lens and a distance between the principal plane of the lens and an entrance surface of an optical modulation element closest to the lens each coincide with a focal length of the lens.

4. The optical computing device as set forth in any one of claims 1 to 3, further comprising:
a driver that drives the spatial light modulator and includes (i) an inverse Fourier transform section that carries out an inverse Fourier transform of an input image to thereby generate a wave number space image and (ii) a binarizing section that binarizes the wave number space image to thereby generate the wave number space image.

5. The optical computing device as set forth in any one of claims 1 to 4, wherein the spatial light modulator is a digital mirror device (DMD) or a ferroelectric liquid crystal on silicon (FLCOS) .

6. The optical computing device as set forth in any one of claims 1 to 5, wherein each optical modulation element included in the optical modulation element group is a reflective optical modulation element and is constituted by a plurality of microcells having respective phase-modulation amounts that are settable independently of each other.

7. The optical computing device as set forth in any one of claims 1 to 6, wherein each optical modulation element included in the optical modulation element group is a transmissive optical modulation element and is constituted by a plurality of microcells having respective phase-modulation amounts that are set independently of each other.

8. An optical computing method, comprising the steps of: carrying out, for each cell, binary modulation of carrier light to thereby generate signal light indicative of a wave number space image; and
carrying out optical computing by causing at least one optical modulation element to sequentially act on the signal light.
